## Europäisches Patentamt
## European Patent Office
## Office européen des brevets

(11) Veröffentlichungsnummer: **0 106 162**
**B1**

(12) **EUROPÄISCHE PATENTSCHRIFT**

(51) Int. Cl.⁴: **A 43 B 5/14**

(45) Veröffentlichungstag der Patentschrift:
30.04.86

(21) Anmeldenummer: 83109059.2

(22) Anmeldetag: 14.09.83

(54) Fussumhüllung für den Radsport.

(30) Priorität: **17.09.82 US 419485**

(43) Veröffentlichungstag der Anmeldung:
**25.04.84 Patentblatt 84/17**

(45) Bekanntmachung des Hinweises auf die Patenterteilung:
**30.04.86 Patentblatt 86/18**

(84) Benannte Vertragsstaaten:
**AT BE CH DE FR GB IT LI LU NL SE**

(56) Entgegenhaltungen:
**DE - A - 2 816 189**
**FR - A - 1 226 023**
**FR - A - 2 250 550**
**FR - A - 2 340 067**
**US - A - 3 808 910**
**US - A - 4 237 628**

(73) Patentinhaber: **PUMA-Sportschuhfabriken Rudolf Dassler KG, Würzburger Strasse 13, D-8522 Herzogenaurach (DE)**

(72) Erfinder: **Cavanagh, Peter R., Prof. Dr., 154 S. Water Street, Pine Grove Mills, Pennsylvania 16868 (US)**
Erfinder: **Lafortune, Mario A., 419 W. Beaver Avenue, State College, Pennsylvania 16801 (US)**

(74) Vertreter: **Hufnagel, Walter, Dipl.-Ing., Dipl.-Wirtsch.-Ing. et al, Dorner & Hufnagel Patentanwälte Bad Brückenauer Str. 19, D-8500 Nürnberg 90 (DE)**

LIBER, STOCKHOLM 1986

## Beschreibung

Die vorliegende Erfindung bezieht sich auf eine Fußumhüllung für den Radsport. Insbesondere betrifft sie eine Fußumhüllung, die während des Radfahrens mit dem Pedal fest verbunden ist.

Derartige Fußumhüllungen sind aus den US-Patentschriften 3,808,910 und 4,237,628 bekannt. Diese zeigen jeweils eine Fußumhüllung, die den Vorderfuß, also etwa ab dem Fußknöchel bis zu den Zehenspitzen umgeben, wobei die äußere Form derselben bekannten typischen Radsportschuhen entSpricht, abgesehen davon, daß sie so ausgebildet sind, daß sie das gesamte oder einen Teil eines Pedals und/oder die Schuhkappenklammer-Haltemittel umschließen.

Derartige Fußumhüllungen wurden bisher lediglich als Schutzabdeckung für den Vorderfuß des Radfahrers als Schutz gegen Wind, Regen, Kälte, Schmutz oder dgl. ausgebildet. Sie wurden bisher nicht daraufhin ausgelegt, eine Erhöhung des Wirkungsgrades beim Radfahren zu erzielen. Zielsetzung war vielmehr, eine solche Fußumhüllung so auszuführen, daß sie nicht ihrerseits ungünstige Wirkungen herbeiführte, daß sie also beispielsweise beim Positionieren und Festhalten des Fußes auf dem Pedal oder bei der Verwendung der Schuhkappenklammer-Haltemittel keine Nachteile aufwiesen.

Weiterhin ist es bekannt, daß die überwiegende, vom Radfahrer aufzubringende Energie dazu verbraucht wird, um die beim Radfahren infolge des Luftwiderstandes entstehende Widerstandskraft zu überwinden. Es wurden bereits viele Versuche durchgeführt, um den Luftwiderstand zu reduzieren, indem verschiedene Fahrradteile und ebenso einzelne Bekleidungsstücke in der Weise abgewandelt wurden, daß diese Widerstandskräfte vermindert werden (vgl. "Bicycling Magazine", Mai 1982, Seiten 50 bis 66).

Mit der vorliegenden Erfindung soll daher die Aufgabe gelöst werden, eine Fußumhüllung der eingangs erwähnten Art so zu verbessern, daß die Nutzleistung des Radfahrers infolge Reduzierung der durch den Luftwiderstand entstehenden Widerstandskraft weiter erhöht wird.

Diese Aufgabe wird erfindungsgemäß durch die im Kennzeichen des Anspruches 1 angegebenen Merkmale gelöst.

Durch die erfindungsgemäßen Maßnahmen umströmt die Luft den Fuß in aerodynamisch günstiger Weise, und zwar sowohl in Fahrtrichtung als auch während der Auf- und Abwärtsbewegung des Schuhes in der Ebene der Pedalbewegung. In vorteilhafter Ausgestaltung der Erfindung ist die Fußumhüllung nicht nur so ausgestaltet, daß sie den Fuß eines Radfahrers mit üblichen Radfahrerschuhen aufnimmt und umgibt, sondern auch ein übliches Pedal oder eine Schuhkappenklammer. Bei einer anderen Ausführung der Erfindung ist die Umhüllung als Schuh- Pedal-Einheit ausgebildet, wobei die Umhüllung selbst als Radfahrerschuh dient und einen besonderen Bereich aufweist, der als Fahrradpedal wirksam ist.

Weitere vorteilhafte Einzelheiten der Erfindung sind in den Unteransprüchen angegeben und werden nachfolgend anhand der in der Zeichnung dargestellten Ausführungsbeispiele näher beschrieben. Dabei zeigen:

Fig. 1 eine schematische Darstellung der einzelnen Fußstellungen des Radfahrers während eines vollen Pedalumlaufes,

Fig. 2 im Längsschnitt eine Seitenansicht einer ersten Ausführung der Erfindung als Schuh-Pedal-Einheit,

Fig. 3 und 4 einen Schnitt gemäß der Linie I-I der Fig. 2, die unterschiedliche Querschnittsprofile zeigen,

Fig. 5 eine Draufsicht gemäß der Linie II-II der Fig. 2,

Fig. 6 eine perspektivische Ansicht eines Pedals der Ausführungen gemäß den Fig. 2 bis 5,

Fig. 7 einen Längsschnitt, ähnlich wie Fig. 2, für eine Fußumhüllung für die Verwendung eines üblichen mit einer Schuhkappenklammer versehenen Pedals und eines üblichen Radfahrerschuhes,

Fig. 8 eine Explosionsdarstellung der Fußumhüllung gemäß Fig. 7 und die

Fig. 9 bis 12 Ausführungen zur Erzeugung eines Kühlluftstromes durch die erfindungsgemäße Fußumhüllung.

Der größte Teil des Widerstandes, der durch einen Schuh eines Radfahrers erzeugt wird, ist durch die relativ hohe Geschwindigkeit der Umgebungsluft bedingt, die sich in Richtung von der Spitze zur Ferse bewegt, da Radrennfahrer bei Windstille mit Geschwindigkeiten bis zu 50 km/h fahren. Da die Schuhe weiterhin mit den Pedalen eine kreisförmige Bewegung ausführen, würden diese während der Auf- und Abbewegung selbst bei Stillstand des Fahrrades einen Luftwiderstand zu überwinden haben. Dieser Widerstand stellt einen bedeutenden Verlust zweiten Grades dar, da in einer typischen Pedalstellung die geradlinige Tangentialgeschwindigkeit des Fußes relativ zum Fahrrad etwa 9 km/h beträgt und die auf dem Luftwiderstand beruhende Behinderungskraft (unter anderen Faktoren) proportional dem Quadrat der relativen Luftgeschwindigkeit ist. Die Bedeutung der Wirkungen des Luftwiderstandes wird noch deutlicher offenbar, wenn man berücksichtigt, daß die Kraft, die benötigt wird, um den Luftwiderstand zu überwinden, proportional der dritten Potenz der Relativgeschwindigkeit ist und die obengenannte Relativgeschwindigkeit des Fußes noch zu derjenigen des Fahrrades algebraisch addiert werden muß.

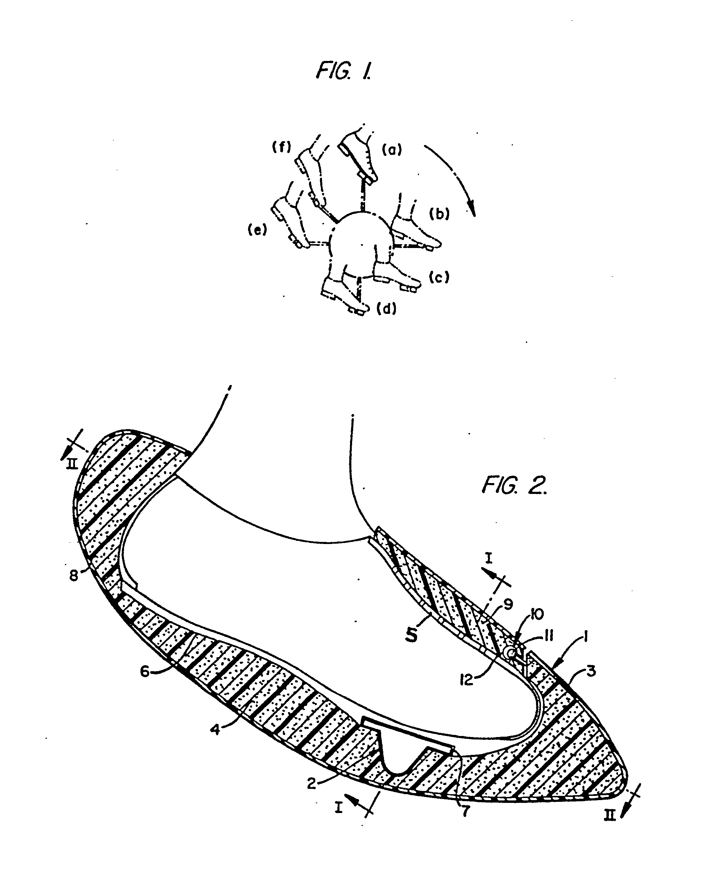

Im Hinblick auf die Fig. 1 ist also ersichtlich, daß die bisher üblichen Radfahrerschuhe nicht zur Reduzierung der Wirkungen des Luftwiderstandes führen. Wenn sich beispielsweise der Fuß eines Radfahrers mit dem Pedal von der Stellung (a) in die Stellung (d) bewegt, wie aus den (Zwischen-)Stellungen (b) und (c) hervorgeht, bilden der Boden des Schuhes und das Pedal eine große, relativ flache Oberfläche die eine beträchtliche Hubkraftkomponente zu einem Zeitpunkt erzeugen, zu der der Radfahrer abwärts gerichtete Kräfte in der Gegenrichtung zu erzeugen versucht. Andererseits kommt der Schuh während der Aufwärtsbewegung von der Stellung (d) über die Stellungen (e) und (f) nach der Stellung (a) in eine Lage, in der er mit einem relativ großflächigen, flachen, dem Spann des Fußes entsprechenden Bereich ziemlich senkrecht steht und so der von vorn nach hinten strömenden Luft einen hohen Widerstand darbietet.

Um nun die obengenannten Luftwiderstandseinflüsse, die auf den Schuh, das Pedal und die Schuhkappenklammer während des Radfahrens einwirken, zu reduzieren, enthalten die Ausführungen der vorliegenden Erfindung eine Fußumhüllung, die aerodynamisch stromlinienförmig ausgebildet ist, um den Luftstromwiderstand in beiden Richtungen, nämlich in Fahrtrichtung und während der Auf- und Abwärtsbewegung des Schuhes in der senkrechten Ebene der Pedalbewegung auf ein Mindestmaß zu verkleinern. Um dies zu erreichen, ist die Fußumhüllung wegen der verschiedenen, in Fig. 1 angedeuteten Fußstellungen und der Wahrscheinlichkeit, daß das Fahrrad nicht bei Windstille gefahren wird, sondern vielmehr tatsächlich auch bei Windströmungen, die von irgendeiner beliebigen Richtung auftreffen, so ausgestaltet, daß sie den Fuß und das Fahrradpedal vollkommen umgibt und sie ist vorzugsweise in allen, um volle 360° möglichen Ebenen stromlinienförmig geformt, mit Ausnahme der Öffnung für den Fußknöchel. Um eine Mindestwirkung zu erzielen, ist es schon ausreichend, daß die Fußumhüllung nur in Richtung parallel zur Rotationsebene der Fahrradpedale, das ist parallel zu einer senkrechten Längsebene durch die Fußumhüllung, stromlinienförmig ausgebildet sind.

Anhand der Fig. 2 bis 6 wird nachfolgend ein erstes, bevorzugtes Ausführungsbeispiel der Erfindung beschrieben. In dieser ersten Ausführung ist die Fußumhüllung als Schuh-Pedal-System ausgebildet, das vom Radfahrer ohne irgendeinen anderen Schuh und als Ersatz für ein normales Fahrradpedal (einschließlich Schuhkappenklammer) verwendet werden kann. Insofern besitzt diese erste Verkörperung der Erfindung zwei Hauptkomponenten, nämlich die Umhüllung 1 und das Pedal 2.

Betrachtet man zunächst den Fußumhüllungsteil des Schuh-Pedal-Systems gemäß Fig. 2, so ist ersichtlich, daß die Umhüllung 1 nach vorn und nach hinten als Verlängerungen des Fußes des Radfahrers hinausragt und eine äußere Hülle 3 mit glatter Oberfläche aufweist, die, wie oben beschrieben, so gestaltet ist, daß sie eine aerodynamisch wirksame stromlinienförmige Gestalt besitzt. Ein Ausführungsbeispiel dieser in der Längsebene wirkenden Stromlinienform ist in Fig. 2 dargestellt. Die gezeigte Gestaltung kann so charakterisiert werden, daß die Fußumhüllung einen vorderen Abschluß in Form eines üblichen Geschosses und einen mittleren Längsabschnitt mit einem Querschnitt in Form etwa eines Eies oder umgekehrten Pilzes besitzt. Verständlicherweise sind jedoch auch andere Ausführungsformen denkbar, deren Wirkungsgrade durch übliche Windkanaltests ermittelt werden können. Die äußere Hülle 3 umschließt einen Körper 4 aus Schaumstoff geringer Dichte. Es kann zwar für die Hülle 3 irgendein hartes oder nicht hartes, einen niedrigen Reibungskoeffizienten aufweisendes Material verwendet werden und in die vorgefertigte Hülle 3 kann ein vorgeformter Körper 4 eingesetzt und mit dieser verbunden sein. Eine im Hinblick auf die Kosten und das Gewicht bevorzugte Ausführungsform besteht jedoch darin, die Hülle 3 und den Körper 4 dadurch herzustellen, daß ein Schaumstoffkörper 4 in Polyurethan getaucht wird, so daß dessen Äußeres damit umhüllt wird.

Innerhalb des Körpers 4 sind ein übliches Schuhoberteil 5 eines Radfahrerschuhes und eine besonders gestaltete, ziemlich harte äußere Sohle 6 mit diesem verbunden, wobei letztere eine Gleitkonsole 7 zur Aufnahme eines hierzu besonders ausgebildeten Pedals 2 enthält. Das Schuhoberteil 5, die Sohle 6 und die Pedalkonsole 7 können im Schaumkörper 4 nach dessen Formung in diesem befestigt sein oder die Befestigung derselben kann während des Gießens des Formkörpers bewirkt werden, wobei die üblichen Gießmethoden zur Anwendung kommen.

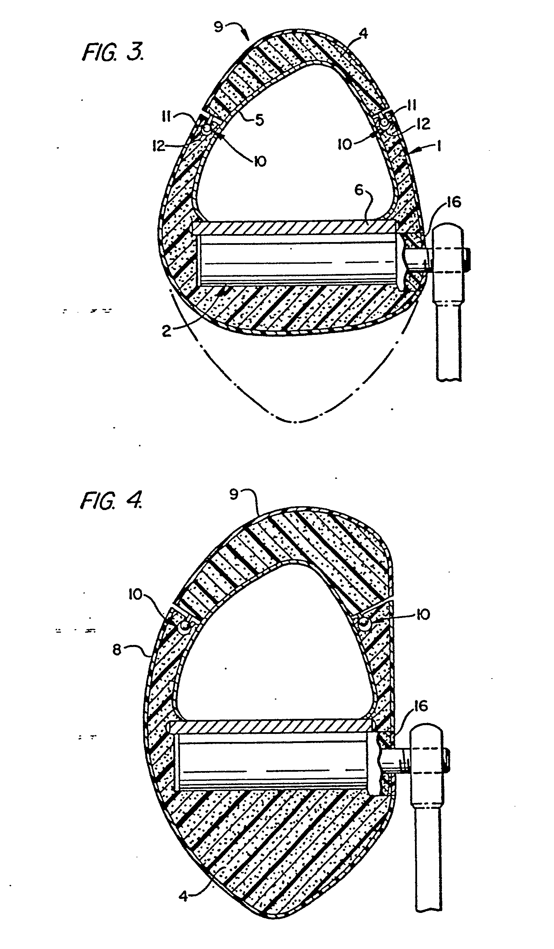

Um das Einsetzen des Fußes des Radfahrers in das Schuhoberteil 5 als auch das Zuschnüren desselben zu erleichtern, kann die Fußumhüllung 1 aus mehreren Teilen bestehen, die ineinanderschnappen können. Diese Teile enthalten einen Hauptteil 8 und einen oberen Teil 9, die durch eine aus einer Kugel und einer Kugelpfanne bestehende Steckverbindung 10 miteinander verbunden sind. Die Steckverbindung 10 enthält ein männliches Element 11 aus starrem Metall oder Kunststoff, das in eines der Fußumhüllungsteile 8, 9 eingebettet sein kann (bei der dargestellten Ausführung im Teil 8), so daß es ein kugelförmiges freies, von ihm abstehendes Ende besitzt. Der andere Teil (beim Ausführungsbeispiel der Teil 9) ist mit einer Vertiefung 12 versehen, die gegengleich zum abstehenden Teil des männlichen Elementes 11 geformt ist. Infolge der Elastizität des Schaumkörpermaterials kann das kugelförmige Ende des männlichen Elementes 11 durch den engen Hals der Vertiefung 12 hindurchgedrückt und durch diesen in dieser Lage gehalten werden, sobald das Element 11 den kugelförmigen Innenraum der Vertiefung 12 erreicht hat. Wie durch einen Vergleich der Fig. 2 mit der Fig. 3 oder 4 ersichtlich ist, sind drei derartige Steckverbindungen 10 vorgesehen, und zwar eine vorn und je eine an der Seite des oberen Teils 9.

Die Fig. 3 und 4 veranschaulichen mögliche Querschnittsprofile der Fußumhüllung 1. Das Profil der Fig. 3 stellt eine Profilgestaltung dar, die vom Standpunkt des Fahrers aus dann günstiger ist, wenn er in einem begrenzten Maße einen Spielraum in der Umhüllung haben möchte. Sie ist jedoch weniger vorteilhaft in der Hinsicht, daß der etwas abgeflachte Boden kein ideales Profil darstellt, wenn man dies vom Standpunkt des Nachuntentretens der Pedale aus betrachtet (siehe in Fig. 1 die Phase zwischen (b) und (d)). Andererseits ist genau das Gegenteil der Fall beim Ausführungsbeispiel gemäß Fig. 4. Diese Ausführung besitzt darüber hinaus ein wirkungsvolleres unteres Profil und sie besitzt zusätzlich eine innere senkrechte Seitenwand, die, obwohl nicht immer günstig, jedenfalls dann vorteilhaft ist, wenn die Luft, die von der zentrischen Längsebene vom Fahrrad aus nach außen strömt, unbedeutend ist. Tatsächlich dürfte vom rein jerodaynamischen Standpunkt aus betrachtet eine Modifikation der Ausführung gemäß Fig. 3, bei der der Boden stromlinienföirmig entsprechend dem Beispiel gemäß Fig. 4 vorgesehen ist-wie durch die stridpunktierte Linie angedeutet ist-die erstrebenswertere Ausbildung darstellen als eines der rein erklärenden Beispiele der Fig. 3 und 4.

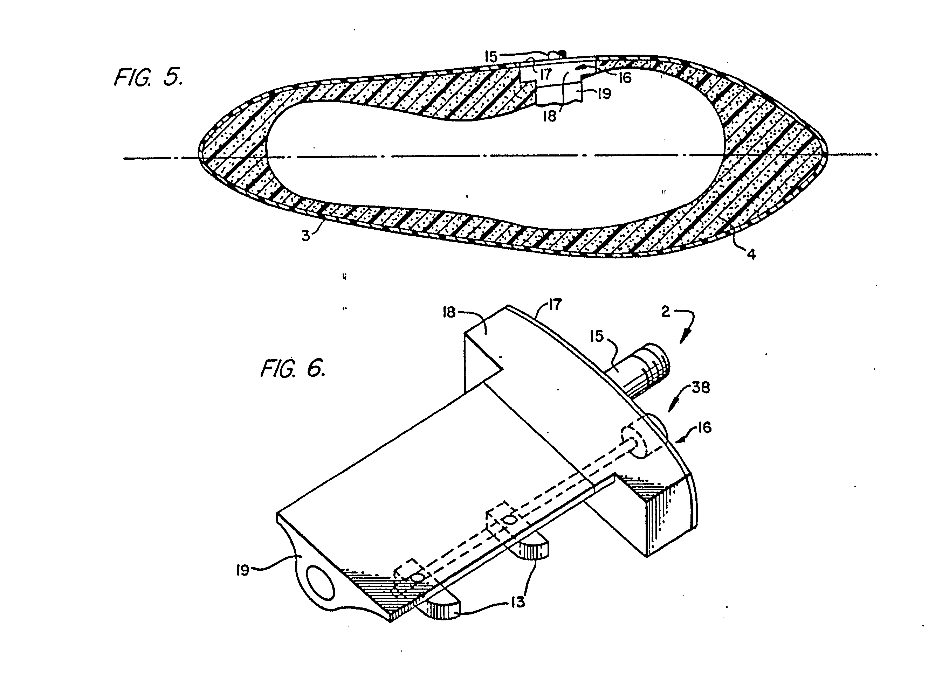

Wenden wir uns nun der Pedalansicht des Schuh-Pedal-Systems der vorliegenden Erfindung zu, wie dies die Fig. 6 der Zeichnung zeigt. Aus der Fig. 6 ist ersichtlich, daß das Pedal 2 eine Welle 15 besitzt, mit der dieses durch eine Schraubverbindung an einer zeichnerisch nicht dargestellten, üblichen Fahrrad-Tretkurbel befestigt werden kann. Ferner sind ein Verschlußteil 16 mit einem Schalenteil 17 und einem Einlageteil 18 aus dem gleichen Material wie die Hülle 3 und der Körper 4 vorgesehen, die in den Abmessungen so gewählt und so geformt sind, daß sie genau passend von der Umhüllungswsnd aufgenommen werden ohne, wie in den Fig. 3, 4 und 5 gezeigt, die Stromlinienform der angrenzenden Umhüllungswandoberflächen zu stören. In Verlängerung des Verschlußteils 16 ist das Pedal-Tritteil 19 vorgesehen, das derart ausgebildet ist, daß es gleitend in die mit der Fußumhüllung 1 eine bauliche Einheit bildende Gleitkonsole 7 paßt. So gesehen, sollte, da der Tritteil 19, wie bereits erläutert, gegengleich zur Gleitkonsole 7 ausgebildet ist, angemerkt werden, daß die Gleitkonsole 7 größer gemacht und so ausgebildet werden könnte, so daß sie das Pedal 2 in unterschiedlich verschobene Längspositionen aufnehmen kann.

Um das Pedal 2 starr am Umhüllungskörper 1 befestigen zu können, ist ein Schließmechanismus nach Art eines Kreuzholzes (cleat type) vorgesehen. Hierzu sei bemerkt, daß irgendein Selbsthalteverschluß, der von Hand wieder entriegelt werden kann, verwendbar ist, um den Tritteil 19 in der Gleitkonsole 7 zu sichern. Ein möglicher Mechanismus ist der in Fig. 6 dargestellte, der ein Paar von Kreuzstäben 13 aufweist, die schwenkbar am Tritteil 19 gelagert sind. Ein federrd vorgespannter Entrastknopf 38 hält die Kreuzstäbe 13 in der beschriebenen Haltestellung, um eine seitliche Bewegung zwischen dem Tritteil 19 und der Gleitkonsole 7 zu verhindern. Andererseits werden die Kreuzstäbe 13 beim Eindrücken des erwähnten Entrastknopfes 38 derart geschwenkt, daß sie nicht mehr über die Kante des Tritteils 19 überstehen und diese dadurch die Entnahme des Pedals aus der Gleitkonsole 7 gestatten.

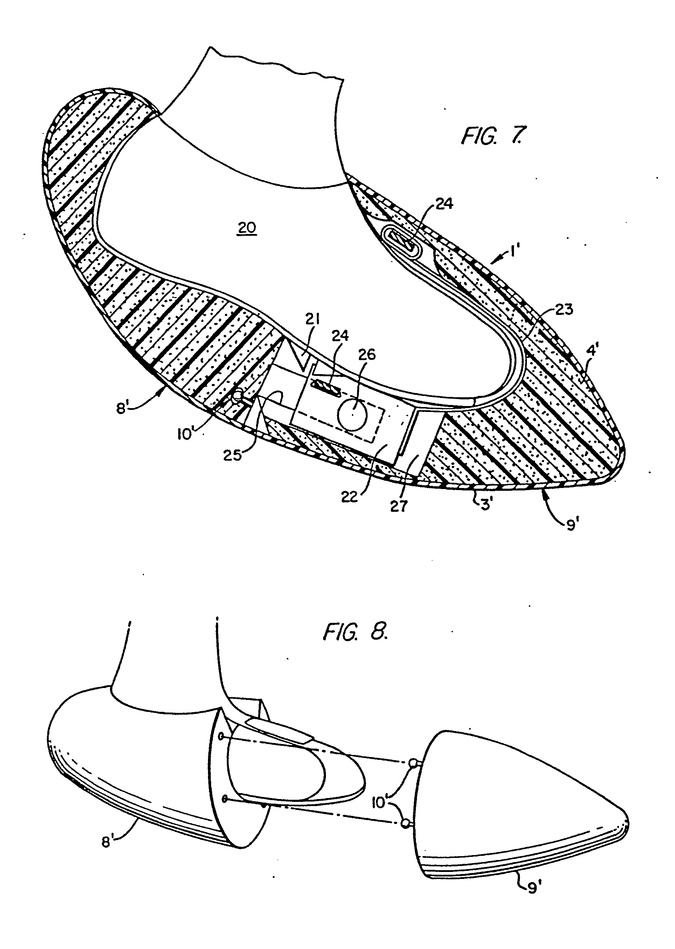

Die Fig. 7 und 8 zeigen eine zweite Ausführungsmöglichkeit der vorliegenden Erfindung, die für die Anwendung mit einem separaten Radfahrerschuhe 20, einem üblichen Rastglied 21 und einem üblichen Fahrradpedal 22 mit einer Schuhkappenklammer 23 und einer Riemenanordnung 24 ausgebildet ist.

In Übereinstimmung mit dieser Ausführungsart besteht die Fußumhüllung 1', ähnlich derjenigen gemäß Fig. 2, aus einer äußeren Hülle 3' mit glatter Oberfläche und einem inneren Körper 4'. Jedoch ist hier weder ein Oberteil noch ein Boden mit dem Inneren des Körpers 4' verbunden, sondern die Hülle ist in eine vordere und in eine hintere Hälfte 8', 9' unterteilt, anstatt in ein Ober- und Bodenteil 8, 9. Die zwei Teile 8' und 9' sind durch Befestigungselemente 10' miteinander verbindbar entsprechend der Steckverbindung 10 gemäß dem Ausführungsbeispiel der Fig. 2. In zusammengesetztem Zustand sind die beiden Teile 8, 9 sichtbar, im wesentlichen jedoch nicht unterscheidbar (so daß die gleiche Stromlinienform beibehalten wird), mit Ausnahme eines Öffnungsschlitzes 25 auf der Innenseite der Fußumhüllung' durch die die Pedalachse 26 (und wahlweise auch das Pedal) beim Einsetzen des Pedals 22 in die Aussparung 27 innerhalb des hinteren Umhüllungsteils 9' sich hindurchbewegt. Selbstverständlich kann ein Absperrglied (ähnlich dem Verschlußtei 16 in Fig. 6) auf dem Pedalschaft angebracht sein, um diese Öffnung zu verschließen. Es sei bemerkt, daß die Aussparung 27, in der sich das Pedal 22 befindet, absichtlich so dargestellt ist, daß sie beträchtlich größer ist als das Pedal, um dem Radfahrer zu ermöglichen, die gewünschte Rastgliedstellung auf dem Pedal einstellen zu können, da es bei dieser Ausführungsform weniger notwendig ist, die Abmessungen der Fußumhüllung 1' an die gegebene Abmessung des Schuhes eines Fahrers anzupassen und weil die Fußumhüllung 1' für die Verwendung verschiedener unterschiedlicher Ausführungen von Pedal-Schuhkappenklammern vorgesehen ist.

Zusätzlich zu der Hauptfunktion, nämlich der Verringerung der durch die Füße des Radfahrers hervorgerufenen Hemm- und Hubkräfte sollte es klar sein, daß die offenbarten Ausgestaltungen der Fußumhüllungen 1, 1' eine zweite Funktion erfüllen können, nämlich die Füße des Radfahrers vor Umgebungseinflüssen, wie Regen, Kälte, Schmutz etc. zu schützen. Jedoch besteht die Möglichkeit, daß der Fuß des Fahrers wegen der hohen thermischen Isoliereigenschaften des Schaumstoffkörpers 4, 4' beim Fahren, insbesondere bei heißer Witterung und über lange Zeitabschnitte, in der Fußumhüllung überhitzt wird. Demzufolge ist es wünschenswert jede der Fußumhüllungen 1, 1' mit Mitteln zu versehen, durch die Luft zum Kühlen am Fuß entlang fließen kann.

Eine Art, in der ein Kühluftstrom in geringer Entfernung vom Fuß zirkulieren kann, besteht in der Anordnung eines Paars von Luftstromkanälen 30, und zwar von jeweils einem auf jeder Seite des Fußes. Jder dieser Luftstromkanäle 30 besitzt grundsätzlich drei Abschnitte. Ein erster Abschnitt 31 ist vollständig durch die äußere Hülle 3 bzw. 3' und den inneren Körper 4 bzw. 4' in der Nähe des Bereiches der Zehen des Fußes des Radfahrers hindurchgeleitet. Dieser erste Abschnitt ist im wesentlichen in Richtung von vorn nach hinten verlaufend angeordnet, so daß er den Einlaß von Luft, die am Fuß in der genannten Richtung vorbeiströmt, erleichtert. Ähnlich durchdringt auch der zweite Abschnitt 32 die äußere Hülle 3 bzw. 3' und den inneren Körper 4 bzw. 4' im wesentlichen in Längsrichtung in der Nähe der Ferse des Fußes, um einen Auslaß für die durch die vom ersten Abschnitt 31 gebildete Einlaßöffnung einfließende Luft zu bilden.

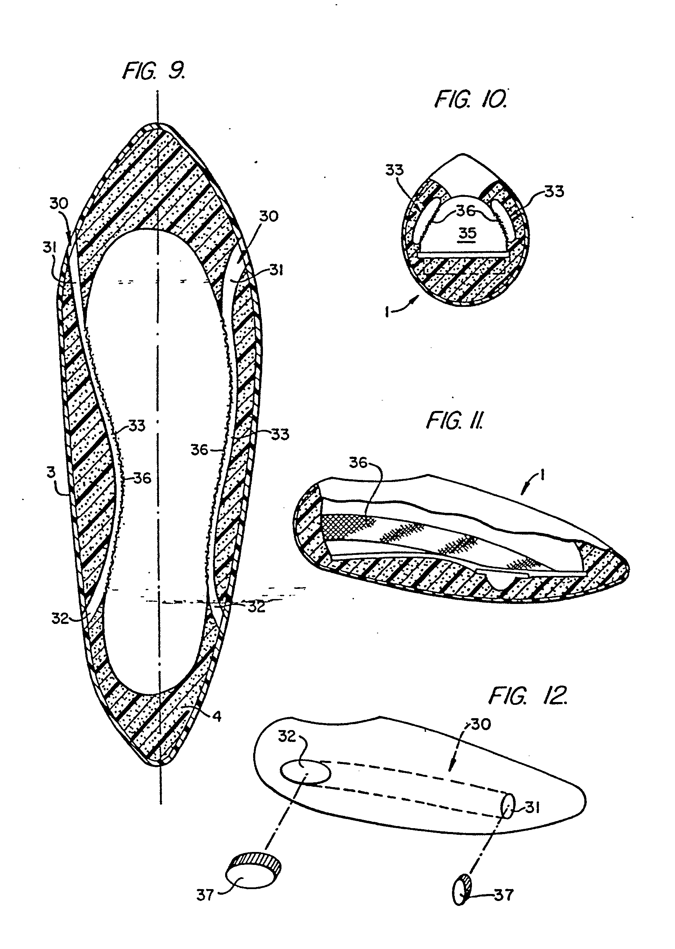

Die Ein- und Ausströmabschnitte 31, 32 sind durch einnen leicht aufwärts geneigten, sich in Längsrichtung erstreckenden Kühlabschnitt 33 miteinander verbunden, der sich im wesentlichen entlang des Fußes des Radfahrers, zumindest vom Fußballen aus bis zur Ferse, erstreckt. Der Kühlabschnitt 33 besitzt - wie am deutlichsten aus Fig. 10 ersichtlich - im wesentlichen einenelliptischen Querschnitt und überschneidet sich auf je einer Seite über einen größeren Teil mit dem Innenraum 35 der Fußumhüllung 1. Die Grenzfläche 36 zwischen dem Kühlabschnitt 33 und dem Innenraum 35 kann offen bleiben, wenn derartige Kühlkanäle bei einer Ausführungsform, wie sie in Fig. 7 dargestellt ist, verwendet werden. Vorzugsweise ist jedoch die Grenzfläche 36 als Abschnitt mit für Luft und Wasser hochdurchlässigem Material ausgebildet, z.B. mit einem Nylongewebe der Maschenweite Nr. 6. Wird die Luftkühlung beim Gegenstand gemäß Fig. 1 angewendet, dann kann eine Nylongewebe-Grenzfläche zwischen dem Kühlkanal 33 und dem Innenraum 35 in einfacher Weise lediglich durch die Herstellung des Oberteils 5 aus einem Nylongewebe der Maschengröße 6 zumindest in den seitlichen Bereichen (Fig. 11) realisisert werden, so daß nach dem Zusammenfügen das Oberteil 5 die luft- und wasserdurchlässige Grenzfläche 36 bildet.

Da es unter einigen Fahrbedingungen unerwünscht ist, daß in der Fußumhüllung 1, 1' Öffnungen vorhanden sind, in die Wasser oder Schmutz eintreten können oder wo die Temperaturbedingungen keinen Kühlluftstrom erfordern, können schließlich in die Abschnitte 31, 32 bzw. diese Öffnungen Stöpsel 37 eingesetzt werden, um diese abzudichten. Diese Stöpsel 37 besitzen vorzugsweise eine der Oberfläche der äußeren Hülle 3, 3' entsprechende Oberfläche und einen inneren Stöpselkörper aus dem gleichen Schaumstoff wie die Körper 4, 4'.

Aus den vorstehenden Ausführungen ergibt sich, daß die vorliegende Erfindung eine Umhüllung angirbt, die die Fahrleistung eines Radfahrers optimiert, indem die Außenfläche so gestaltet ist, daß sie die Hubkraftkomponenten und die Hemmkraftkomponenten des Windwiderstandes, die auf seine Füße einwirken, minimiert und die gleichzeitig eine warme und wasserdichte, schützende Umhüllung für seine Füße darstellt.

Es sind zwar verschiedene Ausführungsmöglichkeiten der Erfindung dargestellt und beschrieben. Es ist verständlich, daß die Erfindung nicht auf diese beschränkt ist, sondern daß auch noch eine Vielzahl von Änderungen und Abwandlungen möglich sind. Die Erfindung soll daher nicht auf die dargestellten und beschriebenen Einzelheiten beschränkt sein, sondern durch die Ansprüche all diese möglichen Anderungen und Abwandlungen mit umfassen.

**Patentansprüche**

1. Fußumhüllung für den Radsport, dadurch gekennzeichnet, daß sie einen Hohlkörper (1, 1') mit einem Innenraum (35) bildet, der im wesentlichen den gesamten Fuß des Radfahrers umgibt und deren äußere Form derart stromlinienförmig ausgebildet ist, daß sie ein aerodynamisch günstig wirkendes Profil zumindest in den Richtungen parallel zur vertikalen Längsebene durch den Hohlkörper (1, 1') aufweist, wodurch die Rücktriebs- und Auftriebskomponenten der Luftwiderstandskräfte auf den Fuß des Radfahrers während des Tretens verringert sind.

2. Fußumhüllung nach Anspruch 1, dadurch gekennzeichnet, daß die Stromlinienform der Außenumhüllung in allen Ebenen über 360° vorgesehen ist, abgesehen von der Öffnung für den Fußknöchel.

3. Fußumhüllung nach Anspruch 1 oder 2, dadurch gekennzeichnet, daß der Innenraum (35) so groß gehalten ist, daß er im wesentlichen den gesamten Tritteil (19) des Pedals (2) aufnimmt.

4. Fußumhüllung nach einem der Ansprüche 1 bis 3, dadurch gekennzeichnet, daß der Hohlkörper (1, 1') aus mehreren Teilen (8, 9) zusammensetzbar ist, um das Einführen des Fußes des Radfahrers zu erleichtern.

5. Fußumhüllung nach Anspruch 4, dadurch gekennzeichnet, daß die einzelnen Teile (8, 9) mittels an ihnen vorgesehenen Schnapp- oder Rastgliedern (11, 12) miteinander verbindbar sind.

6. Fußumhüllung nach einem der Ansprüche 1 bis 5, dadurch gekennzeichnet, daß sie aus einer äußeren glatten Hülle (3, 3') besteht, die einen Körper (4, 4') aus Schaumstoff geringer Schaumdichte umgibt.

7. Fußumhüllung nach einem der Ansprüche 1 bis 6, <u>dadurch gekennzeichnet</u>, daß im Inneren des Hohlkörpers (1, 1') ein Schuhoberteil (5) und eine damit verbundene Schuhsohle (6) angeordnet sind.

8. Fußumhüllung nach Anspruch 7, <u>dadurch gekennzeichnet</u>, daß die Schuhsohle (6) eine Gleitkonsole (7) aufweist, in die ein Tritteil (19) eines Pedals (2) einschiebbar ist.

9. Fußumhüllung nach Anspruch 8, <u>dadurch gekennzeichnet</u>, daß die Gleitkonsole (7) oder der Trittteil (19) Befestigungsmittel (13) zur sicheren Halterung des Tritteils (19) in der Gleitkonsole (7) aufweist.

10. Fußumhüllung nach einem der Ansprüche 1 bis 6, <u>dadurch gekennzeichnet</u>, daß der Innenraum (35) einen Teil zur Aufnahme des Fußes samt Radfahrerschuh und einen weiteren Teil zur Aufnahme eines Pedals (2) aufweist.

11. Fußumhüllung nach Anspruch 10, <u>dadurch gekennzeichnet</u>, daß der Teil zur Aufnahme des Pedals (2) so groß ist, daß das Pedal (2) darin derart nach vorn bzw. hinten verschiebbar ist, daß der Radfahrerschuh mit Rastelementen in verschiedenen Stellungen mit dem Pedal (2) verrastbar ist.

12. Fußumhüllung nach einem der Ansprüche 1 bis 11, <u>dadurch gekennzeichnet</u>, daß sie mit durchgehenden Kühluftkanälen (30, 31, 32, 33) versehen ist.

13. Fußumhüllung nach Anspruch 12, <u>dadurch gekennzeichnet</u>, daß die Kühluftkanäle (30) von einem im wesentlichen in Längsrichtung verlaufenden Einlaßabschnitt (31) in der Nähe des Zehen- bzw. Schuhkappenbereiches des Hohlkörpers (1, 1') zu einem Auslaßabschnitt (32) in der Nähe des Fersenbereiches verlaufen und daß die Kühluftkanäle (30) in einem Luftaustausch mit dem Innenraum (35) in Verbindung stehen.

14. Fußumhüllung nach Anspruch 13, <u>dadurch gekennzeichnet</u>, daß an der Grenzfläche (36) zwischen dem Innenraum (35) und den Kühlluftkanälen (30, 33) ein für Luft und Wasser hochdurchlässiges Material vorgesehen ist.

15. Fußumhüllung nach Anspruch 14, <u>dadurch gekennzeichnet</u>, daß das hochdurchlässige Material wenigstens von einem Teil des Schuhoberteils (5) im Inneren des Hohlkörpers (1, 1') gebildet ist.

16. Fußumhüllung nach einem der Ansprüche 12 bis 15, <u>dadurch gekennzeichnet</u>, daß die Einlaßöffnung und gegebenenfalls auch die Auslaßöffnung der Kühluftkanäle (31, 32) durch Stöpsel (37) verschließbar sind.

17. Fußumhüllung nach einem der Ansprüche 1 bis 16, <u>dadurch gekennzeichnet</u>, daß sie eine über übliche Schuhmaße hinausgehende vordere und hintere stromlinienförmig ausgebildete Verlängerung aufweist.

18. Fußumhüllung nach Anspruch 17, <u>dadurch gekennzeichnet</u>, daß die vordere Verlängerung nach Art einer Geschoßspitze ausgebildet ist.

19. Fußumhüllung nach einem der Ansprüche 1 bis 18, <u>dadurch gekennzeichnet</u>, daß sie im Querschnitt im wesentlichen Eiform aufweist.

20. Fußumhüllung nach Ansprch 17 oder 18, <u>dadurch gekennzeichnet</u>, daß die vordere Verlängerung im Querschnitt die Form eines umgekehrten Pilzes aufweist.

## Claims

1. A foot envelope for cycling, <u>characterized in that</u> it forms a hollow body (1, 1') having an interior (35) which essentially surrounds the whole cyclist's foot and the outer shape of which is made streamlined in such a way that it exhibits at least in the directions parallel which the vertical longitudinal plane through the hollow body (1, 1') a profile having an aerodynamically favourable effect, whereby the drag and lift components of the forces of air resistance upon the cyclist's foot during pedalling are reduced.

2. A envelope as in Claim 1, <u>characterized in that</u> the streamline shape of the outer envelope is provided in all planes over 360°, apart from the opening for the ankle bone.

3. A foot envelope as in Claim 1 or 2, <u>characterized in that</u> the interior (35) is kept big enough for receiving essentially the whole of the tread portion (19) of the pedal (2).

4. A foot envelope as in one of the Claims 1 to 3, <u>characterized in that</u> the hollow body (1, 1') may be composed of a number of parts (8, 9) in order to facilitate the introduction of the cyclist's foot.

5. A foot envelope as in Claim 4, <u>characterized in that</u> the individual parts (8, 9) may be connected together by means of snap or catch members (11, 12) provided on them.

6. A foot enveloped as in one of the Claims 1 to 5, <u>characetrized in that</u> it consists of an outer smooth sheat (3, 3') which surrounds a body (4, 4') of foam material of low foam density.

7. a foot envelope as in one of the claims 1 to 6, <u>characterized in that</u> in the interior of the hollow body (1, 1') ara arranged a shoe upper (5) and a shoe sole (6) connected to it.

8. A foot envelope as in Claim 7, <u>characetrized in that</u> the shoe sole (6) exhibits a slide bracket (7) into which a tread portion (19) of a pedal (2) may be inserted.

9. A foot envelope as in Claim 8. <u>characterized in that</u> the slide bracket (7) or the tread portion (19) exhibits means (13) of fastening for secure mounting of the tread portion (19) in the slide bracket (7).

10. A foot envelope as in one of the Claims 1 to 6, <u>characterized in that</u> the interior (35) ixhibits one part for receiving the foot together with the cyclist's shoe and one further parat for receiving a pedal (2).

11. A foot envelope as in Claim 10, <u>characterized in that</u> the part for receiving the pedal (2) is large enough for the pedal (2) to be able to be shifted forwards or backwards in it so that the cyclist's shoe may be located in various position on the pedal (2) by catch elements.

12. A foot envelope as in one of the Claims 1 to 11, <u>characterized</u> <u>in</u> <u>that</u> it is provided with cooling air channels (30, 31, 32, 33) passing through it.

13. A foot envelope as in Claim 12, <u>characterized in that</u> the cooling air channels (30) run from an inlet portion (31) running essentially in the longitudinal direction near to the toe region or the shoe toecap region of the hollow body (1, 1') to an outlet portion (32) near to the heel region, and that the cooling air channels (30) are connected in air exchanged with the interior (35).

14. A foot envelope as in Claim 13, <u>characterized in that</u> at the boundary area (36) between the interior (35) and th colkling air channels (30, 33) a material is provided which is highly permeable to air and water.

15. A foot envelope as in Claim 14, <u>characterized in that</u> the highly peermeable material is formed of at least one part of the shoe

16. A foot envelope as in one of the Claims 12 to 15 foot envelope as in one of the Claims 1∠ to 15 <u>characterized in that</u> the inlet openings and if necessary also the outlet openings of the cooling air channels (31, 32) may be closed by stoppers (37).

17. A foot envelope as in one of the Claims 1 to 16, <u>characterized</u> <u>in</u> <u>that</u> it exhibits a front and rear elongation made streamlined and extending beyond the usual sizes of shoe.

18. A foot envelope as in Claim 17, <u>characterized in that</u> the front elongation is made after the style of the nose of a bullet.

19. A foot envelope as in one of the Claims 1 to 18, <u>characterized</u> <u>in</u> <u>that</u> in cross-section it exhibits essentially the shape of an egg.

20. A foot envelope as in Claim 17 or 18 <u>characterized in that</u> the front elongation exhibits in cross-section the shape of an inverted mushroom.

## Revendications

1°) Gaine de pied pour le cyclisme, caractérisée en ce qu'elle forme un corps creux (1, 1') avec un espace intérieur qui entoure essentiellement tout le pied du cycliste, et dont la forme extérieure est réalisée suivant des lignes d'écoulement telles qu'elle offre un profil avantageux au point de vue aérodynamique au moins dans les directions parallèles au plan longitudinal vertical passant par le corps creux (1, 1'), de sorte que les composantes de poussée vers l'arrière et de poussée vers le haut des forces de résistance de l'air sont diminuées sur le pied du cycliste pendant l'appui.

2°) Gaine de pied suivant la revendication 1, caractérisée en ce que la forme aérodynamique de la gaine extérieure est prévue dans tous les plans sur 360°, abstraction faite de l'ouverture pour la cheville.

3°) Gaine de pied suivant les revendications 1 ou 2, caractérisée en ce que l'espace intérieur (35) est maintenu assez grand pour recevoir essentiellement toute la partie d'appui (19) de la pédale (2).

4°) Gaine de pied suivant les revendications 1 à 3, caractérisée en ce que le corps creux (1, 1') peut être formé par l'assemblage de plusieurs parties (8, 9) pour faciliter l'introduction du pied du cycliste.

5°) Gaine de pied suivant la revendication 4, caractérisée en ce que les différentes parties (8, 9) sont réunies ensemble au moyen d'organes à encliquetage ou à déclic (11, 12) prévus sur elles.

6°) Gaine de pied suivant l'une des revendications 1 à 5, caractérisée en ce qu'elle est constituée d'une gaine extérieure lisse (3, 3'), qui entoure un corps (4, 4') en mousse de faible densité.

7°) Gaine de pied suivant l'une des revendications 1 à 6, caractérisée en ce que, dans l'intérieur du corps creux (1, 1'), il est disposé une partie supérieure de chaussure (5) et une semelle de chaussure (6), reliée avec la précédente.

8°) Gaine suivant la revendication 7, caractérisée en ce que la semelle de chaussure (6) offre une console de glissement (7) sur laquelle peut être poussée une partie d'appui (19) d'une pédale (2).

9°) Gaine suivant la revendication 8, caractérisée en ce que la console de glissement (7), ou la partie d'appui (19), présente un organe de fixation (13) pour maintenir en toute sécurité la partie d'appui (19) sur la console (7) de glissement.

10°) Gaine suivant l'une des revendications 1 à 6, caractérisée en ce que l'espace intérieur (35) comporte une partie pour recevoir le pied du cycliste, y compris sa chaussure et une autre partie pour recevoir une pédale (2).

11°) Gaine suivant la revendication 10, caractérisée en ce que la partie destinée à recevoir la pédale (2) est d'une grandeur suffisante pour que la pédale (2) puisse y être déplacée vers l'avant ou l'arrière, et que la chaussure du cycliste puisse être enclenchée avec la pédale (2) dans différentes positions, au moyen d'éléments d'enclenchement.

12°) Gaine suivant l'une des revendications 1 à 11, caractérisée en ce qu'elle est pourvue de canaux d'air de refroidissement quí la traversent (30, 31, 32, 33).

13°) Gaine suivant la revendication 12, caractérisée en ce que les canaux d'air frais (30) s'étendent d'une section d'entrée (31) essentiellement dans le sens longitudinal dans le voisinage de la zone des orteils ou du bout de la chaussure, du corps creux (1, 1') jusqu'à une section de sortie (32) dans le voisinage de la zone du talon, et que les canaux d'air frais (30) sont en communication, dans un échange d'air, avec l'espace intérieur (35).

14°) Gaine suivant la revendication 13, caractérisée en ce que sur la surface limite (36), entre l'espace intérieur (35) et les canaux d'air frais (30, 33), il est prévu une matière hautement perméable à l'air et à l'eau.

15°) Gaine suivant la revendication 14, caractérisée en ce que la matière hautement perméable est formée par une partie de la partie supérieure (5) de la chaussure à l'intérieur du corps creux (1, 1').

16°) Gaine suivant l'une des revendications 12 à 15, caractérisée en ce que l'ouverture d'entrée, et éventuellement aussi l'ouverture de sortie des canaux refroidissants (31, 32), peuvent être fermées par des obturateurs (37).

17°) Gaine suivant l'une des revendications 1 à 16, caractérisée en ce qu'elle comporte un prolongement de forme aérodynamique, au-delà de la dimension habituelle d'une chaussure, vers l'avant et vers l,arrière.

18°) Gaine suivant la revendication 17, caractérisée en ce que le prolongement avant est réalisé sur le modèle de la pointe d'une balle de fusil.

19°) Gaine suivant l'une des revendications 1 à 18, caractérisée en ce qu'en coupe transversale, elle présente sensiblement la forme d'un oeuf.

20°) Gaine suivant l'une des revendications 17 ou 18, caractérisé en ce que le prolongement avant présente, en coupe transversale, la forme d'un champignon retourné.

FIG. I.

FIG. 2.

FIG. 3.

FIG. 4.

FIG. 5.

FIG. 6.

FIG. 7.

FIG. 8.

FIG. 9.

FIG. 10.

FIG. II.

FIG. 12.